# EUROPEAN PATENT APPLICATION

(11) **EP 2 026 063 A1**
(43) Date of publication of application: **18.02.2009**
(21) Application number: 07015346.5
(22) Date of filing: 06.08.2007
(51) Int. Cl.: G01N 27/447

(54) **Electrophoresis matrix based on cross-linked double network hydrogel**

(71) Applicant: Chiari, Marcella, 20100 Milano (IT)
(72) Inventor: Chiari, Marcella, 20100 Milano (IT)
(74) Representative: Banfi, Paolo

(57) **Abstract**

Hydrogel characterised by high mechanical stability, improved adhesion to plastic and better sieving properties, an alectrophoresis apparatus containing the same hydrogel and a method for separating macromolecules using it. The hydrogel is formed by a water-soluble polymer derivatized with allyl and/or acryloyl radicals and bearing 1,2-diol or 1,3-diol functionalities, a cross-linker and an olefinic monomer.

## Description

### FIELD OF THE INVENTION

The present invention is in the field of separation matrices for electrophoresis of biological macromolecules. Particularly the invention provides an hydrogel characterised by high mechanical stability, improved adhesion to plastic and better sieving properties, an alectrophoresis apparatus containing the same hydrogel and a method for separating macromolecules using it.

### BACKGROUND OF THE INVENTION

Electrophoresis is a technique used to separate proteins and nucleic acids, that differ in size, charge or conformation. When charged molecules are placed in an electric field, they migrate toward either the positive or negative pole according to their charge. Proteins and nucleic acids are electrophoresed within a matrix or "gel". The gel is often cast in the shape of a thin slab, with wells for loading the sample and immersed within an electrophoresis buffer that provides ions to carry a current and some type of buffer to maintain the pH at a relatively constant value.

Miniaturization of electrophoresis has developed rapidly in the past 20 years. Capillary and microchip electrophoresis have recently attracted much attention in DNA and protein analysis due to the high efficiency, high throughput, time-saving ability, easy operation, and low consumption of samples and reagents. In microchip electrophoresis, nucleic acid fragments are separated by capillary electrophoresis in a chip with micro-fabricated channels, with automated detection as well as on-line data evaluation. In the early stage of the development of capillary electrophoresis the separation column was filled with cross-linked polyacrylamide gel. Cohen et al. in 1988 reported DNA separations of remarkable efficiency in gel filled columns [A.S. Cohen, D.R. Najarian, A. Paulus, A. Guttman, J.A. Smith, and B.L. Karger, Proc. Natl. Acad. Sci. USA, 85, 1988, 9660]. The capillary was filled with a solution of monomers (acrylamide, Bis) and catalysts, followed by *in situ* polymerization. In spite of the unsurpassable efficiency provided by polyacrylamide gels in DNA separations (15-30 million plates/m have been reported for separation of oligonucleotides), filling a microchannel with a separation matrix is challenging from various points of view. The parameters influencing radical polymerization of polyacrylamide such as temperature, oxygen, amount of catalyst and initiator], may be difficult to control leading to a non reproducible sieving behaviour of gels with the same nominal composition [A. Chrambach, and D. Rodbard, "Polymerization of polyacrylamide gels: efficiency and reproducibility as a function of catalyst concentrations", Sep. Sci., 7 (6), 1972, 663-703]. In addition, the difficulty of obtaining gels of adequate quality depends on the well known phenomenon of volume reduction that occurs during the polymerisation. Furthermore, the instability of a channel filled with a polyacrylamide gel can lead to gel collapse and bubble formation during electrophoresis. These events occur even if the microchannel contains a gel of good quality, simply because a covalent cross-linked gels may undergo reversible change in structure only over a limited stress range, beyond which collapse occurs [T. Tanaka, Sci. Am., 244, 1981, 124.]. Gel instability under a high field causes gel breakdown with a decrease in current and loss in resolution [H. Swerdlow, K.E. Dew-Jager, R. Grey, N.J. Dovichi, and R. Gesteland, "Stability of capillary gels for automated sequencing of DNA", Electrophoresis, 13, 1992, 47-483; H. Swerdlow, S. Wu, H. Harke, and N.J. Dovichi, "Capillary gel electrophoresis for DNA sequencing. Laser - induced fluorecence detection with the sheath flow cuvette", J. Chromatogr., 516, 1990, 61-67; H. Drossman, J.A. Luckey, A. Kostichka, J. D'Cunha, and L.M. Smith, "High-speed separations of DNA sequencing reactions by capillary electrophoresis", Anal. Chem., 62, 1990, 900-903; Baba, M. Tsuhako, T. Sawa, and M. Akashi, "Temperature-programmed capillary affinity gel electrophoresis for the sensitive base-specific separation of oligonucleotides. J. Chromatogr. 632, 1993, 137-142]. Besides the possible stress that acts on the gel, polyacrylamide shows a hydrolytic instability, in particular at alkaline pH, generating carboxyl groups covalently linked to the matrix that affect the performance of a capillary over time.

These problems have lead many groups to investigated the use of uncross-linked polyacrylamide in CE for DNA and SDS-complex protein separations. Bode was the first who investigated sieving mechanism in a non-gel medium [H.J. Bode, "SDS-polyethyleneglycol electrophoresis: a possible alternative to SDS_polyacrylamide gel electrophoresis, FEBS Lett., 6, 1976, 6-58; H.J. Bode, "The use of liquid polyacrylamide in electrophoresis. II. Relationship between gel viscosity and molecular sieving, Anal. Biochem. 83, 1977, 364-371.]. Later, Tietz et. al demonstrated the separating ability of viscous solutions of polyacrylamide in electrophoresis [D. Tietz, M.H. Gottlieb, J.S. Fawcett, and A. Chrambach, "Electrophoresis on uncrosslinked polyacrylamide: molecular sieving and its potential applications", Electrophoresis, 7, 1986, 217-220.]. Bode and Tietz pioneering work demonstrated the feasibility of carrying out separations in liquid sieving polymers on condition that they are combined with an anticonvective device. In a capillary channel, due to its anticonvective nature, a wide variety of liner polymer solutions were used for efficient sieving of DNA molecules. The capillary was first filled with a polymer solution of hydrophilic cellulose derivatives as reported by Zhu et al.[85]. Later, a wide variety of polymers have been employed as sieving matrices in CE. Most of them can be obtained or synthesized in a wide range of molecular masses and dissolved at various concentrations in the electrolyte buffer. Solutions of polymers of from different sources such as uncross-linked polyacrylamide [P.D. Grossman, J. Chromatogr. A, 663 (1994) 219-227; M. C. Ruiz-Martinez, J. Berka, A. Belenkii, F. Foret, A. W. Miller, and B.L. Karger, Anal. Chem. 65 (1993) 281-2858.], polydimethylacrylamide [Madabhushi, R.S., Electrophoresis, 1998, 19, 224-230], polyvinyl alcohol [V. Dolnik and M. Novotny, J. Microcol. Sep., 4 (1992) 515-519.] and polyethylene oxide [Guttman, A., Horvath, J., Cooke, N.,. Anal. Chem., 1993, 65, 199-203] hydroxyethyl [A.E., Barron, D.S., Soane and H.W., Blanch, J. Chromatogr. A, 652 (1993) 3-16], hydroxypropylmethyl [.Y. Baba, N. Ishimaru, K. Samata, and M. Tsuhako, J. Chromatogr. A, 653 (1993) 329-335.], methyl cellulose [D.A. McGregor and E.S. Yeung, J. Chromatogr. A, 680 (1994) 491-496], liquified agarose [P. Bocek, A. Chrambach, Electrophoresis, 12 (1991) 1059-1061; A. Chrambach and A. Aldroubi, Electrophoresis, 14 (1993) 18-22.] have been used with varying degrees of success.

More recently microscale electrophoresis has evolved from capillary to microchip as an alternative separation platform. In the microchip format, the use a solid hydrogel has several advantages over liquid sieving materials in particular for channels that are several hundreds micron large. Solid, crosslinked gels does not diffuse out from the channel and have better sieving power then liquid gels. These characteristics lead to faster separations within a channel of shorter length. In addition the use of disposable chip does not require high gel stability under en electric field thus significantly reducing the disadvantages of cross-linked gels. The simplest method for forming a hydrogel in a microchannel is by radical-chain addition polymerization. The gel formation involves initiation, propagation, transfer and termination steps. An initiation step compatible with the microchannel technology involves formation of initiating radicals by an external stimulation such as light or heat. Light induced photopolymerization has several advantages over the other methods in which radicals are formed by redox processes. These are low temperature conditions, usually room temperature, and controllability via selective wavelength irradiation and light intensity. Moreover, light can be focused onto a particular site, thus polymer can be formed only at desired places. The use of hydrogels obtained by photopolymerization provides additional advantages such as: faster polymerization times, as compared to chemically polymerized gels, easier fluid handling than high-viscosity bulk polymer solutions, facile tailoring of the sieving matrix porosity for specific applications, and improved resolution arising from prevention of nonspecific adsorption on separation channel walls [Schwartz, H., Palmieri, R., Brown, R.: CRC Press: Boca Raton, FL,1993].

There is a strong industrial interest in utilizing plastic for the production of microchannel systems for electrophoresis due to fact that these materials are less expensive and easier to use in mass production than glass or silica-based substrates. Techniques such as plasma etching or reactive ion etching, laser ablation, imprinting, and injection molding are typically applicable to the fabrication of devices in plastic materials. There are a wide variety of plastic materials with different physical and chemical properties that can be applied to different kinds of microfluidic technology. One of the problems with plastic substrates is the difficulty in achieving uniform surface treatment. The surface chemistry needed to functinalize glass to achieve a strong attachment of the gel to the surface of the microchannel is well established whereas the adhesion of an hydrogel to the surface of a polymer channel is often problematic in plastic devices.

In the past 20 years there have been many attempts to optimize the composition of DNA and protein hydrogel sieving matrices. In the US patent, 5840877 Kozulic discloses electrophoresis gels of enhanced selectivity produced by adding a preformed polymer to a polymerization solution containing at least one monomer and at least one cross-linker. The rational behind this invention is to produce gels with a new topology that allow to improve the electrophoretic resolution of large DNA fragments. Although there may be some similarity with the hydrogels of the present invention the lack of cross-linking between the first polymer and the second one formed by radical polymerization of mono and diolefinic compounds does not result in the formation of a matrix with suitable features both in terms of adhesion to surfaces and mechanical strength.

In the US patent 5785832 Chiari and Righetti report on covalently cross-linked, mixed-bed agarose-polyacrylamide gels for electrophoresis and chromatography. The mixed-bed matrices are formed by the copolymerization of a substituted agarose mixture with acrylamide monomers. The disclosed matrices have improved polymerization properties enabling the formation of gels which have higher porosity and elasticity than conventional gels and which are therefore particularly suited to the separation of intermediate size DNA fragments and high molecular mass proteins. However, these gels, being weekly cross-linked, tend to considerably overswell in buffer. This feature limits their application as pre-cast gels in microchannels.

Gel scientists have strived to establish a useful method to create tough gels. Gong et al. succeeded in creating a tough double network (DN) gel, which is a kind of interpenetrated gel prepared in the following two-step procedure: the first step is gelation of rigid polyelectrolyte (the first network), and in the second step flexible neutral polymers (the second network) are synthesized in the first network. The DN gels, containing 90% water, exhibit compressive fracture strength of more than 20 MPa and a rather high Young's modulus (ca. 0.1 MPa).[ J. Phys. Chem. B, 109 (34), 16304 -16309].

### DESCRIPTION OF THE INVENTION

The invention provides a hydrogel suited for electrophoretic separation of high molecular weight molecules characterised by high mechanical stability, optimal swelling properties and soft rubberlike behaviour, with improved adhesion to plastic and better sieving properties in electrophoresis. The hydrogel is formed by a polymer bearing olefinic moieties, which is physically entangled and covalently cross-linked with a flexible neutral polymer synthesized in the presence of the first polymer and of a diolefinic monomer which reinforces the cross-linking with the first polymer thus strengthening the gel.

The hydrogel according to the invention is obtained by polymerising, in an aqueous medium at a temperature of 20-65°C, a mixture containing:
(1) a water-soluble polymer or macromer derivatized with allyl and/or acryloyl residues and containing units having a 1,2-diol or 1,3-diol structure;
(2) an olefinic monomer of the formula: 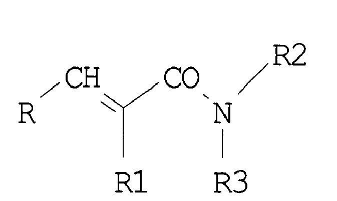 wherein R and R1, independently from one another represent hydrogen, alkyl C₁-C₄ or phenyl; R2 and R3 independently from one another represent hydrogen, alkyl C₁-C₄ optionally bearing one or more substituents OH, SH, OR₄ or SR₄ wherein R₄ is an alkyl C₁-C₄ or a hydroxyalkyl C₁-C₄ and optionally interrupted by one or more nitrogen atoms or by a heterocyclic ring;
(3) a cross-linker, which is selected from
   i) a compound of the formula 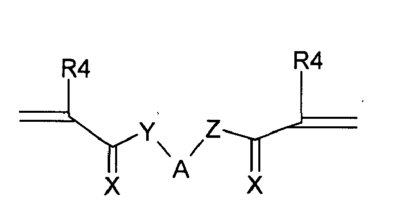 wherein R4 is H or CH₃; X is O or S, Y and Z are independently -O-or NH; A is C₁-C₄ alkyl;
   ii) an acryloyl or an allyl endcapped polyethylene glycol (PEG) of 200, 600, and 3400 molecular weight;
(4) a radical polymerization initiator

The water-soluble polymer comprises units having a 1,2-diol or 1,3-diol functionalities, such as polyhydroxyl polymers including polyvinyl alcohol (PVA) or copolymers of vinyl alcohol containing a 1,3-diol skeleton. The backbone can also contain hydroxyl groups in the form of 1,2-glycols, such as copolymer units of 1,2-dihydroxyethylene. These can be obtained, for example, by alkaline hydrolysis of vinyl acetate-vinylene carbonate copolymers. Other polymeric diols can be used, such as saccharides (agarose). All or some of the free hydroxyl groups present in the water-soluble polymer are derivatized to form an ether bearing an allyl or an acryloyl functionality. The polymer can contain more than one type of crosslinkable group.

The water-soluble polymer is preferably a polyvinylalcohol, poly-N-acryloylaminoethoxyethanol; agarose, hydroxyethylagarose, hydroxypropylmethylcellulose, galactomannan, dextran, in which some or all of the free hydroxyl groups are derivatized to form an ether bearing an allyl functionality.

The olefinic monomer is preferably selected from acrylamide, methacrylamide, preferably mono- or di-substituted on the nitrogen by C1-C12 linear or branched alkyl chains, which in turn can be substituted by a halogen, preferably fluorine, or by a methoxy group or by hydroxyl groups.

More preferably the olefinic monomer is selected from acrylamide, dimethylacrylamide, N-acryloylaminoethoxyethanol and a mixture of acrylamide and N-acryloylaminoethoxyethanol.

The cross-linker is preferably selected from N,N'-methylene-bis-acrylamide, dihydroxyethylene-bis-acrylamide, piperazine-di-acrylamide and a mixture of N,N'-methylene-bis-acrylamide and dihydroxyethylene-bis-acrylamide.

The radical polymerisation initiator is preferably a photoinitiator, a chemical initiator such as a red-ox couple (APS, TEMED), or a thermal initiator such as APS, AIBN. Particularly preferred are Ammonium Persulfate (APS) (NH4)2S2O8, TEMED 1,2-Bis(dimethylamino)ethane, azobisisobutyronitrile, azobis(4-cyanovaleric acid) or a mixture of the following photoinitiator:
1-Hydroxy-cyclohexyl- phenyl-ketone Benzophenone; 2-Hydroxy-2-methyl-1-phenyl-1-propanone; 2-Hydroxy-1-[4-(2-hydroxyethoxy) phenyl]-2-methyl-1-propanone; Methylbenzoylformate; oxy-phenyl-acetic acid 2-[2 oxo-2- phenyl-acetoxy-ethoxy]-ethyl ester and oxy-phenyl-acetic 2-[2-hydroxy-ethoxy]-ethyl ester; alpha, alpha-dimethoxy-alpha-phenylacetophenone; 2-Benzyl-2-(dimethylamino)-1-[4-(4-morpholinyl) phenyl]-1-butanone; 2-Methyl-1-[4-(methylthio)phenyl]-2-(4-morpholinyl)-1-propanone; Diphenyl (2,4,6-trimethylbenzoyl)-phosphine; Phosphine oxide, phenyl bis (2,4,6-trimethyl benzoyl); Bis (eta 5-2,4-cyclopentadien-1-yl), Bis [2,6-difluoro-3-(1H-pyrrol-1-yl) phenyl]titaniun lodonium, (4-methylphenyl) [4-(2-methylpropyl) phenyl]-hexafluorophosphate.

The polymerization is generally initiated by UV light of a wave length of 300-450.

Preferably, the concentration of a combination of said monomer and said cross-linker is at least about 1.5% (w/v) and the concentration of said water-soluble allyl-derivatized polymer is from 0.005 to 2% (w/v).

In one embodiment, the invention provides a method for preparing a gel suited for use in electrophoretic separation of DNA and proteins molecules comprising the steps of:
dissolving so much of at least one olefinic monomer, at least one cross linker, and at least one preformed polymer derivatized by allyl double bonds, as above defined, in a mutual solvent such that the concentration of said preformed polymer is about 0.005 to 2% (w/v) and the concentration of a combination of said monomer plus said cross linker is at least about 2% (w/v), wherein said monomer and cross linker and polymer contain vinyl groups, free radical polymerizing and cross linking said monomer and said cross linker and said polymer in said solution through said vinyl groups sufficient to form a gel.

In a further embodiment, the polymerisation composition includes modified polyvinyl alcohol (PVA) and agarose macromers, such as those described in U.S. Pat. Nos. 5,508,317 (Example 2), 5,665,840 (Example 9), 5,849,841 (Example 1), 5,932,674 (Example 16), 6,011,077 (Examples 10,11), 5,939,489 (Examples 3,4), 5,785,832 (Claim 1) or 5,807,927 (Examples 9-11). The macromers disclosed in U.S. Pat. No. 5,508,317, for example, are PVA prepolymers modified with pendant crosslinkable groups, such as acrylamide groups containing crosslinkable olefinically unsaturated groups. These macromers can be polymerized by photopolymerization or redox free radical polymerization, for example. The hydrophobicity of these macromers can be increased by substituting some of the pendant hydroxyl groups with more hydrophobic substituents. The properties of the macromers, such as hydrophobicity, can also be modified by incorporating a comonomer in the macromer backbone. The macromers can also be formed having pendant groups crosslinkable by other means.

If a degradable hydrogel is desired, the macromers disclosed in WO 01/44307 (Example 9-10) can be used. Other suitable macromers include those disclosed in U.S. Pat. No. 5,410,016 (Claim 11) to Hubbell et al., U.S. Pat. No. 5,100,992 and U.S. Pat. No. 4,826,945 to Cohn et al., U.S. Pat. Nos. 4,741,872 and 5,160,745 to De Luca et al, and U.S. Pat. No. 4,511,478 to Nowinski et al.

In cases where the macromers have free radical polymerizable groups, a two part redox system may be employed for polymerization. One part of the system contains a reducing agent such as ferrous salt. Various ferrous salts can be used, such as ferrous gluconate dihydrate, ferrous lactate dihydrate, or ferrous acetate. The other part of the solution contains an oxidizing agent such as hydrogen peroxide. Either or both of the redox solutions can contain the monomers and the polymer or the latter may be supplied in a separate solution. The two solutions are sequentially or simultaneously applied to a gel casting mold which can be a microchannel. The agents react to initiate the polymerization of the macromer, of the monomer and of the cross-linker to generate a crosslinked hydrogel.

Other reducing agents can be used, such as, but not limited to cuprous salts, cerous salts, cobaltous salts, permanganate, and manganous salts.. Other oxidizing agents that can be used include, but are not limited to, t-butyl hydroperoxide, t-butyl peroxide, benzoyl peroxide, cumyl peroxide, etc.

In another embodiment, a single initiator is utilized. A solution containing the macromer, the monomer and the cross-linker is mixed with a UV photoinitiator such as those reported in claim 74. The solution of macromer, cross-linkers and monomers is then irradiated with UV light to generate a crosslinked hydrogel coating. With the use of a suitable photoinitiator, visible light may be used to initiate polymerization.

In a preferred embodiment, the gel is obtained by the polymerization of 0.2%w/v agarose derivatized with allyl groups as reported in Example 1, 1M acrylamide, 0.0065 M N,N' methylene-bis-acrylamide catalyzed by Irgacure 184.

In another preferred embodiment the gel is obtained by the polymerization of 0.5%w/v polyvinyl alcohol derivatized with allyl groups as reported in example 2, 1M acrylamide, 0.0065 M N,N' methylene-bis-acrylamide catalyzed by lrgacure 184.

The hydrogels are used in an electrophoresis gel cassette comprising a gel-holder. The gel-holder is used with an electrophoresis apparatus selected from the group consisting of capillary gel electrophoresis, microchannel and tube gel electrophoresis, and slab gel electrophoresis.

In a further embodiment, the invention provides a method of electrophoretic separation of large molecules, especially biological molecules such as proteins and nucleic acids, which comprises forming an hydrogel as above described, loading the samples containing the biological molecules thereon and applying thereto an electrophoretic current and voltage for a time and at a temperature sufficient to cause said molecules to migrate through said gel a distance which is related to molecular weights of said molecules.

### Description of the Figures

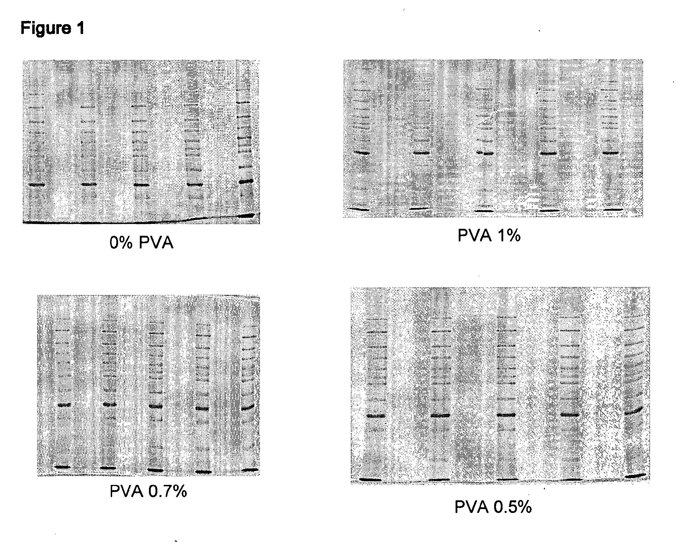

**Figure 1****:** separation of molecular weight protein markers in gels of different composition: the concentration of acrylamide and BIS are 10% and 0.5% respectively, that of allyl PVA changes as reported on the figure. The gels were cast as described in example 4.

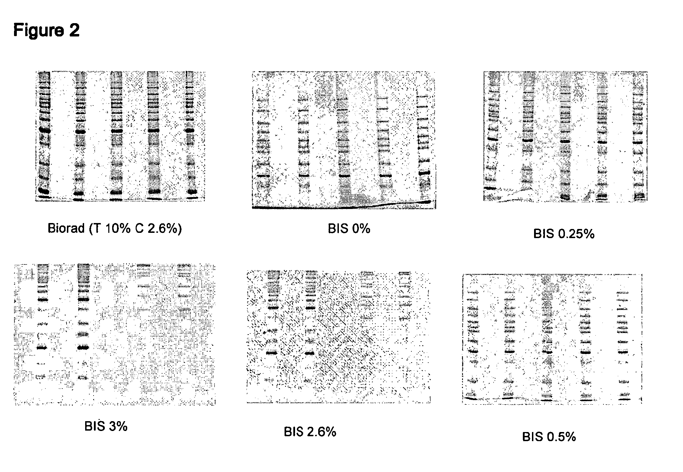

**Figure 2****:** SDS gel separation of the molecular weight markers in gels of different composition: the concentration of acrylamide and PVA are 10% and 1% respectively, that of Bisacrylamide varies as reported in the figure. The gels were cast as described in example 4.

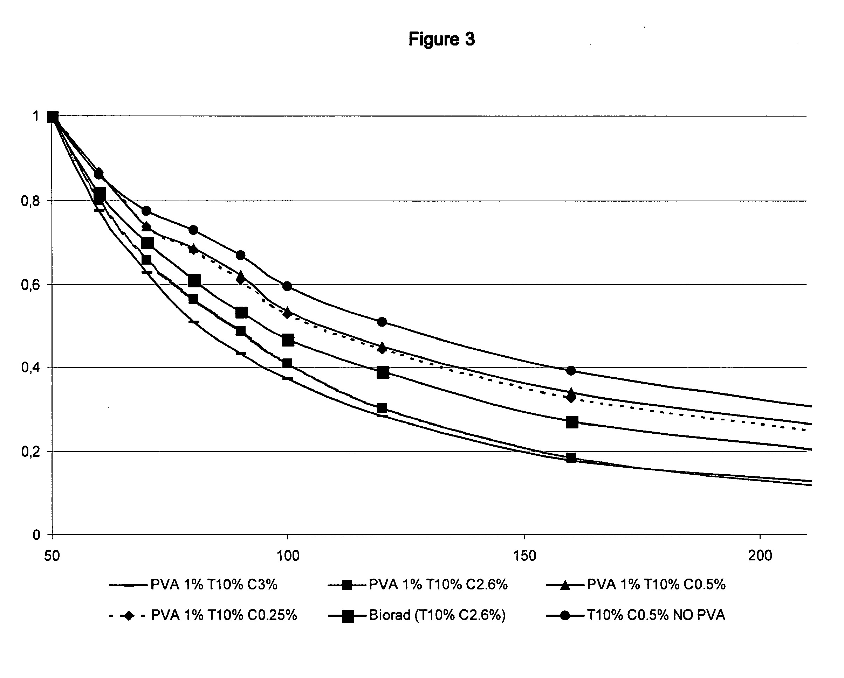

**Figure 3****:** Relative mobility of protein molecular weight markers of different size separated in SDS-gels of different composition. The mobility are calculated from the experiments reported in Figure 2. The green curve label Biorad refers to a conventional polyacrylamide gel 10%T, 2.6% C.T= Acrylamide, C= Bisacrylamide.

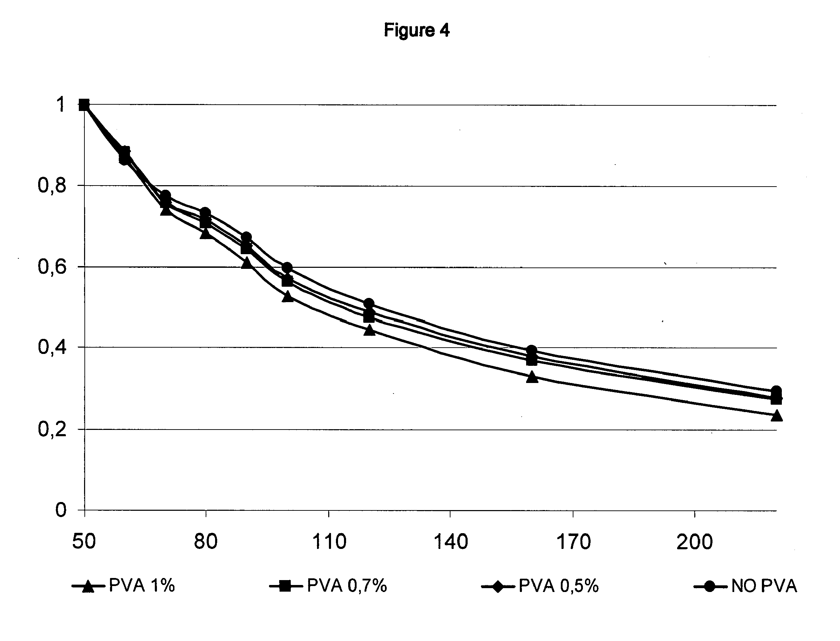

**Figure 4****:** Relative mobility of protein molecular weight markers of different size separated in SDS-gels of different composition. The concentration of acrylamide and Bis are 10% and 0.5% respectively, that of allyl PVA is indicated in the legend of the figure. The mobility are calculated from the experiments reported in Figure 1.

T= Acrylamide, C= Bisacrylamide

### Examples

### Example 1

### Synthesis of allyl agarose

33 mg of sodium borohydride and 1,6 ml of allylglycidyl ether were added, under magnetic stirring to a suspension of agarose (1g) in NaOH (33 ml, 0.3 N). After stirring for 12 hours, agarose was recovered from the suspension by filtration and washed with distilled water to neutral pH. The derivatized agarose was dehydrated with methanol and dried in a oven at 35°C under vacuum.

To determine the structure LE Agarose derivatized as described above was subjected to NMR analysis. Activated agarose was dissolved in DMSO-d6 at 90°C. After complete solubilization the temperature was lowered to 50°C and all the ¹³C spectra at 50.29 MHz were acquired on AM-Bruker wide bore spectrometer. As generally accepted, the basic unit of agarose consists of alternating 3-linked β-D-galactopyranose and 4-linked 3,6-anhydro-α-L-galactopyranose residues. Substituents such as sulfate esters, methyl ethers etc. in different amounts are present. The proton-decoupled ¹³C NMR spectrum of agarose shows the typical resonance of the base unit and also the presence of a methyl ether in position 6 of the pyranose ring. All the resonances were assigned on the basis of previous reported assignments, Japhe, W. and Lahaye, M., Carbohydr. Res., 1989, 190, 249-265. In the proton decupled ¹³C NMR spectrum of activated agarose the two characteristics signals of methyne carbons are present in a well separated region (resonances of C1 and C2 referred to DMSO signals: 116.05 ppm and 135.27 ppm respectively) and therefore were used for quantitative determination with respect to the anomeric signals.

All the proton-decupled spectra were acquired with sufficient relaxation delay (30 sec) in order to justify the integration of signals. The regions of anomeric resonances and methyne carbons were integrated separately. The ratio between the two integrated regions gives the amounts of the allyl-glycidil-ether insertion, which indicates one molecule per one base dimer. Resonances of C1 and C2 referred to DMSO signals: 116.05 ppm and 135.27 ppm respectively.

Substituted agarose dissolves at 70-75 C, gelify at 31 °C and redissolves at 58-60°C.

### Example 2

### Synthesis of allyl polyvinyl alcohol (PVA)

Four grams of PVA, 99% hydrolized, with a typical Mw ranging from 89000-98000 Da, were dissolved in 115 mL of water at boiling temperature. To the solution, cooled at room temperature, 15 mL of 1M NaOH solution are added, followed by the addition of 33 mg of sodium borohydride and of 1.6 mL of allylglycidyl ether. The reaction is stirred overnight at room temperature. The solution is dialyzed against water and freeze-dried to recover the polymer.

### Example 3

### Gel Preparation (allyl agarose)

SDS electrophoresis was performed in a Mini-Protean II dual slab gel cell from BioRad using slab gels, 7 cm long, 8 cm wide and 1 mm thick. Mixed bed gels were prepared by dissolving at 95°C allyl agarose (0.2 w/v) in 0.375 M Tris-HCl buffer pH 8.8. The solution was cooled to 40°C and maintained in thermostatic bath during addition of acrylamide (1M), Bisacrylamide (0.0065M) and SDS (0.1% w/v). APS (0.04%) and TEMED (0.05% v/v) were added immediately before transferring the solution to the casting mould.

The sample was used to separate molecular weight markers from Sigma containing Myosin (205 kDa), β-Galactosidase (116 kDa), Phosphorilase b (97 kDa), Fructose-6-phosphate kinase (84 kDa), Albumin (66 kDa), Glutamic Dehydrogenase (55 kDa), Ovalbumin (45 kDa), Glyceraldehyde-3-phosphate Dehydrogenase (36 kDa). All electrophoretic runs were performed at 200V for 45 min. After electrophoresis, gels were stained with colloidal Coomassie Brilliant Blue G 250.

### Example 4

### Gel Preparation (allyl PVA)

SDS electrophoresis was performed in a Mini-Protean II dual slab gel cell from BioRad using slab gels, 7 cm long, 8 cm wide and 1 mm thick. Mixed bed gels were prepared by dissolving at 95°C allyl PVA (2% w/v) in water. The solution was cooled at room temperature. Variable amounts of acrylamide, Bisacrylamide and allyl PVA were dissolved in 0.375 M Tris-HCl buffer pH 8.8 containing SDS (0.1% w/v). APS (0.04%) and TEMED (0.05% v/v) were added immediately before transferring the solution to the casting mould.

The sample was used to separate molecular weight markers from Sigma containing Myosin (205 kDa), β-Galactosidase (116 kDa), Phosphorilase b (97 kDa), Fructose-6-phosphate kinase (84 kDa), Albumin (66 kDa), Glutamic Dehydrogenase (55 kDa), Ovalbumin (45 kDa), Glyceraldehyde-3-phosphate Dehydrogenase (36 kDa). All electrophoretic runs were performed at 200V for 45 min. After electrophoresis, gels were stained with colloidal Coomassie Brilliant Blue G 250. In Figure 1, and 2 the separation of the molecular weight markers in gels of different composition is shown. In Figure 3 and 4, the relative mobility of proteins of different molecular weights is compared to that in the control gel of polyacrylamide cross-linked with BIS (10%T, 2.6%C). The of PVA copolymer matrices provided a better resolution in a broader range of protein molecular weights. This feature is likely due to the higher average pore size of copolymer gels which allows high Mw proteins to freely penetrate into the gel fibres. A gel with constrictive pores would be an obstacle to the migration of large proteins thus preventing their separation. Small variations of PVA concentration lead to significant effects on gel characteristics.

## Claims

1. A method for preparing a hydrogel suitable for the electrophoretic separation of high molecular weight molecules, which comprises polymerising, in an aqueous medium at a temperature of 20-65°C, a mixture containing:
(1) a water-soluble polymer or macromer derivatized with allyl and/or acryloyl radicals and bearing 1,2-diol or 1,3-diol functionalities;
(2) an olefinic monomer of the formula: 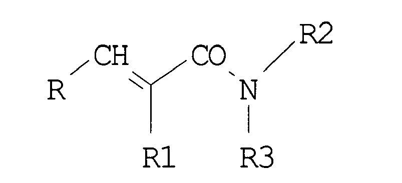 wherein R and R1, independently from one another represent hydrogen, alkyl C₁-C₄ or phenyl; R2 and R3 independently from one another represent hydrogen, alkyl C₁-C₄ optionally bearing one or more substituents OH, SH, OR₄ or SR₄ wherein R₄ is an alkyl C₁-C₄ or a hydroxyalkyl C₁-C₄ and optionally interrupted by one or more nitrogen atoms or by a 5 or 6-membered heterocyclic ring;
(3) a cross-linker, which is selected from
i) a compound of the formula 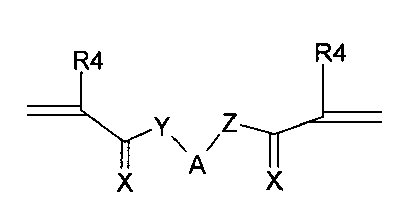 wherein R4 is H or CH₃; X is O or S, Y and Z are independently -O- or NH; A is C1-C4 alkyl;
ii) an acryloyl or an allyl endcapped polyethylene glycol (PEG) of 200, 600, and 3400 molecular weight;
(4) a radical polymerization initiator

2. The method of claim 1, wherein the water-soluble polymer carries 1,2-diol or 1,3-diol functionalities.

3. The method of claims 1 or 2, wherein said polymer is selected from polyvinylalcohol, poly-N-acryloylaminoethoxyethanol, agarose, hydroxyethylagarose, hydroxypropylmethylcellulose, galactomannan, dextran, in which some or all of the free hydroxyl groups are derivatized to form an ether bearing an allyl functionality.

4. The method of claim 1, wherein the olefinic monomer is selected from acrylamide, methacrylamide, preferably mono- or di-substituted on the nitrogen by C1-C12 linear or branched alkyl chains, which in turn can be substituted by a halogen, preferably fluorine, or by a methoxy group or by hydroxyl groups.

5. The method of claim 4, wherein the olefinic monomer is selected from acrylamide, dimethylacrylamide, N-acryloylaminoethoxyethanol and a mixture of acrylamide and N-acryloylaminoethoxyethanol.

6. The method of claim 1, wherein the cross-linker is selected from N,N'-methylene-bis-acrylamide, dihydroxyethylene-bis-acrylamide, piperazine-di-acrylamide and a mixture of N,N'-methylene-bis-acrylamide and dihydroxyethylene-bis-acrylamide.

7. The method of claim 1, wherein the radical polymerisation initiator is a photoinitiator, a chemical initiator such as a red-ox couple (APS, TEMED), or a thermal initiator such as APS, AIBN.

8. The method of claim 7, wherein said initiator is selected from APS, TEMED, APS and AIBN.

9. The method of claim 1, wherein the concentration of a combination of said olefinic monomer and said cross-linker is at least 1.5% (w/v) and the concentration of said water-soluble allyl-derivatized polymer is from 0.005 to 2% (w/v).

10. The method of claim 1, wherein the water-soluble polymer is agarose derivatized with allyl groups, the olefinic monomer is acrylamide, the cross-linker is methylene-bis-acrylamide.

11. The method of claim 1, wherein the water-solble polymer is polyvinyl alcohol derivatized with allyl groups, the monomer is acrylamide, the cross-linker is methylene-bis-acrylamide.

12. A hydrogel suitable for the electrophoretic separation of high molecular weight molecules obtainable by the method of claims 1-11.

13. A method of electrophoretic separation of biological molecules, which comprises forming an hydrogel according to claim 12, loading the samples containing the biological molecules thereon and applying thereto an electrophoretic current and voltage for a time and at a temperature sufficient to cause said molecules to migrate through said gel a distance which is related to molecular weights of said molecules.

14. A method according to claim 13, wherein the biological molecules are proteins or nucleic acids.

15. An electrophoresis apparatus containing a pre-formed hydrogel according to claim 12.

16. The electrophoresis apparatus of claim 15, which is selected from the group consisting of capillary gel electrophoresis, microchannel and tube gel electrophoresis, and slab gel electrophoresis.
